# FASCICULE DE BREVET EUROPEEN

(11) **EP 2 685 347 B1**
(45) Date de publication et mention de la délivrance du brevet: **15.11.2017**
(21) Numéro de dépôt: 13174599.4
(22) Date de dépôt: 02.07.2013
(51) Int. Cl.: G06F 1/16, H04M 1/02

(54) **Cadre ergonomique pour interface de commande tactile et interface de commande correspondante**
Ergonomischer Rahmen für eine berührungsempfindliche Befehlsschnittstelle und entsprechende Befehlsschnittstelle
Ergonomic frame for tactile command interface and corresponding command interface

(30) Priorité: 09.07.2012 FR 1256574
(43) Date de publication de la demande: 15.01.2014
(73) Titulaire: Zodiac Aero Electric, 93100 Montreuil (FR)
(72) Inventeur: De Bossoreille, Romain, 75017 Paris (FR); Nahmiyace, Michaël, 94130 Nogent s/Marne (FR)
(74) Mandataire: Delprat, Olivier

(56) Documents cités:
- DE-A1- 3 123 596
- US-A1- 2004 066 422
- US-A1- 2007 081 303
- US-A1- 2008 164 982

## Description

L'invention concerne, de manière générale, les interfaces de commande tactiles, et concerne plus particulièrement l'aide à la manipulation de telles interfaces de commande.

Une application particulièrement intéressante de l'invention concerne l'utilisation d'interfaces de commande tactile dans le domaine de l'aéronautique. Toutefois, l'invention s'applique également à tout autre domaine dans lequel les interfaces tactiles sont utilisées dans un environnement soumis à des vibrations ou, de manière générale, à des perturbations susceptibles de gêner l'utilisateur et d'augmenter les risques d'erreurs de manipulation.

En premier lieu, quel que soit le type d'interface, même lorsqu'il s'agit d'actionner un bouton de commande, la main de l'utilisateur peut être sujette à des tremblements, ou à des erreurs d'appréciation de la position de la zone à actionner. Ce problème se pose de façon accrue lorsque le bras de l'opérateur est tendu de sorte que, dans tous les cas, il est nécessaire que l'utilisateur porte son regard sur la zone à manipuler alors que son attention doit rester concentrée sur une autre tâche.

Ces problèmes d'ergonomie se posent également de façon accrue lorsqu'il s'agit de réaliser des tâches relativement longues dans un environnement soumis à des vibrations ou à des perturbations, de sorte que, la fatigue aidant, l'opérateur éprouve, à la longue, des difficultés à positionner parfaitement ses doigts sur une zone de l'interface à manipuler.

Par ailleurs, alors que les interfaces mécaniques, de type bouton de commande, permettent aisément d'identifier la position d'un organe à manipuler, notamment en permettant à l'utilisateur de reposer son doigt sur un organe identifiable au toucher, le développement des interfaces tactiles ne permet pas d'identifier au toucher une zone de commande à manipuler.

En outre, lorsqu'elles ne sont plus parfaitement propres, les interfaces tactiles sont susceptibles de devenir glissantes.

Au vu de ce qui précède, il a été constaté que les interfaces de commande tactiles, bien qu'avantageuses à plusieurs égards, sont peu commodes à utiliser dans des environnements soumis à des vibrations, ou à des turbulences d'amplitudes imprévisibles. Tel est en particulier le cas à bord d'aéronefs dans lesquels, notamment, les vibrations ou les trous d'air empêchent le pilote de positionner précisément son doigt sur une zone à manipuler.

Il a par ailleurs été constaté que l'utilisation de telles interfaces nécessite, de la part de l'utilisateur, en particulier du pilote, de porter son regard sur l'interface alors que son attention doit être maintenue sur une autre tâche, par exemple lors de l'atterrissage, alors que les risques d'erreur doivent être proscrits.

Le document US 2004/0066422 A1 concerne un système d'assistance à la manipulation d'un équipement électronique tactile. Le document US 2007/0081303 A1 concerne un boitier pour dispositif de calcul ayant une interface tactile. Les documents US 2008/0164982 A1 et DE 3123596 A1 illustrent l'arrière plan technologique.

Au vu de ce qui précède, le but de l'invention est de pallier les inconvénients précités et d'améliorer l'ergonomie des interfaces de commande tactiles.

L'invention a donc pour objet, selon un premier aspect, un cadre pour interface de commande tactile comprenant une bordure périphérique destinée à entourer tout ou partie de l'interface tactile et une zone centrale ouverte par laquelle l'interface est activable tactilement.

Le cadre comporte au moins une zone en creux délimitant une surface de réception d'un doigt d'un utilisateur.

Cette zone en creux constitue ainsi une surface sur laquelle l'utilisateur peut caler l'un de ses doigts pour constituer un référentiel pour les autres doigts permettant d'améliorer la dextérité.

Ainsi, grâce au calage de la main par l'un des doigts, l'utilisateur est parfaitement en mesure de repérer spatialement ses autres doigts, et la manipulation de l'interface à commande tactile est moins sensible aux vibrations ou autres perturbations.

On notera que dans certains cas d'utilisation, cette interface tactile pourra reposer sur ou encadrer un écran d'affichage.

Selon une autre caractéristique, la zone en creux constitue une gouttière concave qui s'étend le long d'au moins l'un des bords longitudinaux du cadre.

Cette zone en creux peut également constituer une gouttière qui s'étend le long d'au moins l'un des bords latéraux du cadre.

Par exemple, la gouttière a une configuration variable le long desdits bords.

Il peut par exemple s'agir d'une gouttière ayant une section variable d'une extrémité à l'autre de la gouttière ou dans des zones spécifiques de la gouttière.

Le fond de la zone en creux peut par ailleurs être doté de reliefs d'indexation de la position du doigt de l'utilisateur.

On notera que la gouttière peut en outre être dotée d'un liseré lumineux.

Dans un mode de réalisation, la gouttière forme un angle général de 45° par rapport à un plan du cadre.

Selon encore une autre caractéristique, la gouttière peut être bordée, du côté de la zone centrale ouverte, par une zone en relief.

On notera également que la zone en creux peut être réalisée dans un matériau différent de celui du reste du cadre et identifiable au toucher.

L'invention a également pour objet, selon un deuxième aspect, une interface de commande à écran tactile comprenant un cadre sur lequel est monté au moins un écran tactile et comportant au moins une zone en creux délimitant une surface de réception d'un doigt de l'utilisateur.

Une telle interface est particulièrement adaptée pour constituer une interface de commande d'équipements embarqués à bord d'un aéronef.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'une interface de commande tactile conforme à l'invention ;
- la figure 2 est une vue de face de l'interface de la figure 1 ;
- la figure 3 est une vue schématique en coupe d'un exemple de réalisation de la gouttière du cadre des figures 1 et 2 ;
- la figure 4 montre l'interface en cours d'utilisation ; et
- les figures 5 à 8 montrent divers modes de réalisation de la gouttière.

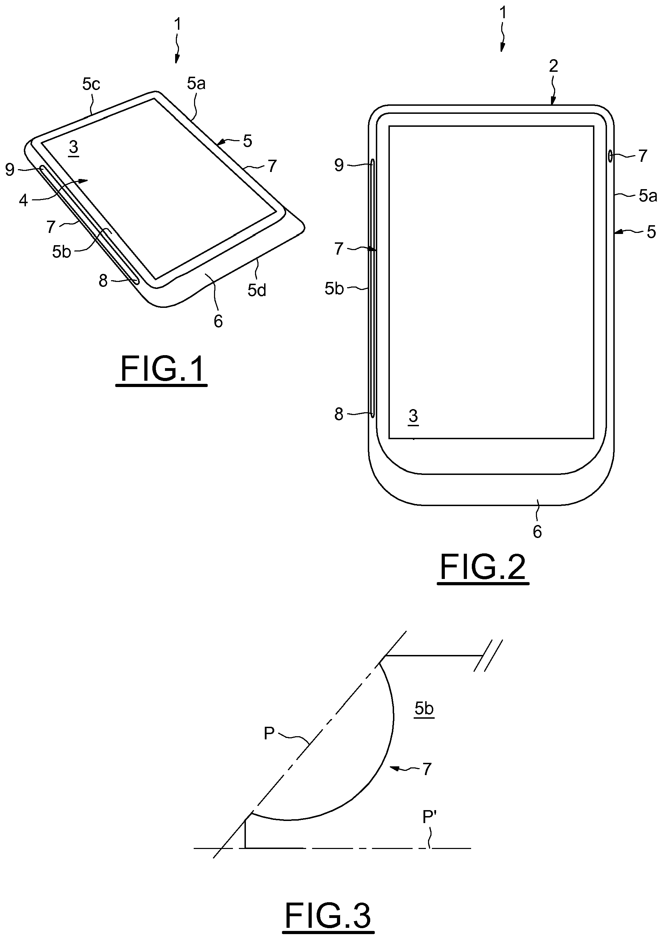

Sur les figures 1 et 2, on a représenté une interface de commande tactile conforme à l'invention, désignée par la référence numérique générale 1.

Dans une application particulièrement intéressante de l'invention, cette interface de commande est destinée à être intégrée à un panneau de contrôle d'un cockpit d'aéronef, afin de commander un ensemble d'instruments ou dispositifs embarqués à bord de l'aéronef.

Comme on le voit, cette interface comprend essentiellement un cadre 2 dans lequel est monté un écran 3 rendu tactile. Par écran tactile, on entend, dans le cadre de la présente description une surface tactile pouvant servir ou non à l'affichage d'informations.

Le cadre 2 comporte plus particulièrement une zone centrale 4 ouverte par laquelle l'écran tactile 3 est accessible pour être manipulé et une bordure périphérique 5 entourant la zone centrale ouverte 4.

Dans l'exemple de réalisation représenté, la bordure périphérique 5 a une forme globalement rectangulaire et délimite une seule zone centrale ouverte.

On notera toutefois que l'on ne sort pas du cadre de l'invention lorsque la bordure périphérique adopte toute autre forme ou configuration pour, par exemple, délimiter plusieurs zones centrales ouvertes destinées à délimiter une ou plusieurs interfaces tactiles.

Comme on le voit sur les figures 1 et 2, la bordure périphérique 5 comporte ici deux bords longitudinaux 5a et 5b mutuellement opposés ainsi que deux bords transversaux 5c et 5d.

Au moins l'un des bords transversaux et, de préférence, le bord transversal 5d destiné à être tourné vers l'utilisateur, est pourvu d'une portion bombée 6 ou, de manière générale, en relief, destinée à constituer une surface d'appui pour le poignet de l'utilisateur. Une telle zone bombée est toutefois optionnelle.

Les bords longitudinaux sont par ailleurs dotés chacun d'une zone en creux 7 réalisée sous la forme d'une gouttière longitudinale s'étendant le long des bords 5a et 5b le long d'une partie substantielle de l'écran tactile 3.

Cette zone en creux 7 est réalisée sous la forme d'une gouttière concave pratiquée le long des bords du cadre pour constituer une surface de réception de l'un des doigts de l'utilisateur, par exemple du pouce.

Comme on le voit sur la figure 3, la gouttière 7 a une forme concave, par exemple en forme de cylindre tronqué, dont le plan général de troncature P forme un angle d'environ 45° par rapport au plan général P' de l'interface. En d'autres termes, la gouttière est dans cet exemple tournée dans une direction formant un angle de 45° par rapport au plan P'.

Ainsi, la gouttière 7 constitue un point de référence pour la main de l'utilisateur et, grâce à son orientation, elle permet en outre de caler efficacement le doigt pour obtenir une meilleure sensation en permettant de serrer facilement l'interface en plaquant le doigt contre la tablette.

En outre, une telle orientation permet d'approcher sensiblement latéralement la tablette et permet ainsi à l'utilisateur de l'atteindre aisément à l'aveugle.

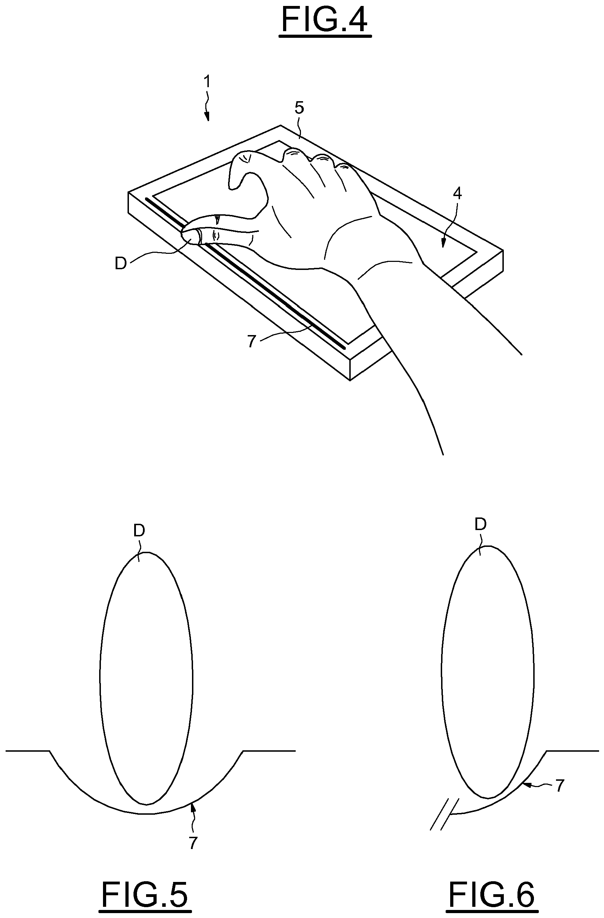

Par ailleurs, une telle gouttière, qui s'étend le long des bords longitudinaux du cadre 2, constitue une glissière pour le doigt de l'utilisateur, le long de laquelle le doigt peut glisser pour atteindre toute zone de l'interface (figure 4).

Bien entendu, les extrémités mutuellement opposées 8 et 9 de la glissière constituent des butées permettant de fournir des informations tactiles relatives au positionnement des extrémités de l'écran tactile.

Bien entendu, il est également possible de prévoir dans les gouttières, des repères additionnels correspondant à des zones particulières de l'écran tactile.

Toutefois, de manière générale, de telles informations tactiles, qui correspondent avantageusement à des zones de commande de l'interface, peuvent être obtenues en utilisant des gouttières de configurations variables.

Il peut, par exemple, s'agir de prévoir des zones de section variable, des zones en creux, en relief, des ergots, des gravures, des crans, ...

Toutefois, de préférence, dans tous les cas, la zone en creux de la gouttière sera conformée à l'un des doigts de l'utilisateur, par exemple au pouce et adoptera un rayon de courbure choisi en fonction d'un des doigts qu'elle est destinée à recevoir.

Bien entendu, lorsque le cadre est doté en zone centrale de plusieurs ouvertures, de telles gouttières peuvent également être prévues le long d'un rail longitudinal ou transversal central, et l'on adaptera, en conséquence, la section de la gouttière pour la faire correspondre à la taille d'un autre doigt.

Dans l'exemple de réalisation représenté, la gouttière est prévue sur les deux bords longitudinaux du cadre.

Une telle gouttière pourrait être prévue uniquement sur l'un des bords longitudinaux.

Elle pourrait également être prévue sur l'un ou sur les deux bords transversaux.

On notera par ailleurs que dans l'exemple de réalisation représenté, la gouttière en creux a une forme concave et est réalisée sous la forme d'un cylindre tronqué.

On pourrait également, en variante, réaliser la gouttière en faisant varier sa profondeur ou en adoptant toute autre forme en coupe transversale, par exemple carrée, triangulaire, ...

Dans un mode de réalisation, la gouttière peut également être dotée d'un liseré lumineux s'étendant par exemple le long de toute la gouttière ou réalisé sous la forme de points lumineux disposés côte à côte afin, par exemple, de fournir des informations relatives notamment au fonctionnement de l'interface, ou d'indiquer le positionnement de la gouttière en cas de perte de visibilité.

On notera enfin que l'invention n'est pas limitée au mode de réalisation décrit.

On pourra en effet prévoir de doter le fond de la gouttière de tout relief approprié pour indexer la position du doigt de l'utilisateur.

On pourra également prévoir de réaliser la gouttière en un matériau différent de celui du reste du cadre afin de permettre à l'utilisateur d'identifier la gouttière grâce à son effusivité. On pourrait par exemple la réaliser sous la forme d'un insert métallique intégré dans un cadre en matière plastique.

On notera enfin en référence aux figures 5 à 8, que la gouttière peut adopter diverses configurations.

Comme indiqué précédemment en référence à la figure 3, la gouttière peut adopter une forme concave. L'orientation de la gouttière peut à cet égard varier selon les utilisations. Elle peut s'étendre à plat (figure 5) ou être orienté selon un angle choisi de manière à faciliter le calage du doigt D (figure 6). Le rayon de courbure de cette gouttière peut être variable.

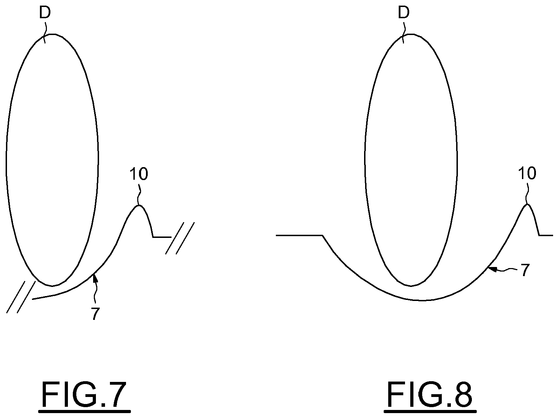

En outre, du côté tourné vers la zone centrale ouverte 4 dans laquelle est placé l'écran tactile 3, la gouttière peut être dotée d'un relief 10 permettant d'améliorer encore le calage du doigt de l'utilisateur (figure 7). Un tel relief est bien entendu particulièrement avantageux lorsque la gouttière est tournée à 90° par rapport au plan P' c'est-à-dire lorsque le plan de troncature P de la gouttière est parallèle au plan général P' de l'interface (figure 8).

## Revendications

1. Cadre pour interface de commande tactile (3), comprenant une bordure périphérique (5) destinée à entourer tout ou partie de l'interface tactile et une zone centrale (4) ouverte par laquelle l'interface est activable tactilement, ce cadre comportant au moins une zone en creux (7) délimitant une surface de réception d'un doigt d'un utilisateur constituant une gouttière concave qui s'étend le long d'au moins l'un des bords longitudinaux (5a, 5b) du cadre, et **caractérisé en ce que** la gouttière est dotée d'un liseré lumineux.

2. Cadre selon la revendication 1, **caractérisé en ce que** la zone en creux constitue une gouttière qui s'étend le long d'au moins l'un des bords latéraux (5c, 5d) du cadre.

3. Cadre selon l'une des revendications 1 et 2, **caractérisé en ce que** la gouttière a une forme variable le long desdits bords.

4. Cadre selon la revendication 3, **caractérisé en ce que** le fond de ladite zone en creux est doté de reliefs d'indexation de la position du doigt de l'utilisateur.

5. Cadre selon l'une quelconque des revendications 1 à 4, **caractérisé en ce que** la gouttière forme un angle de 45° par rapport à un plan du cadre.

6. Cadre selon l'une quelconque des revendications 1 à 5, **caractérisé en ce que** la gouttière est bordée, du côté de la zone centrale ouverte (4), par une zone en relief (10).

7. Cadre selon l'une quelconque des revendications 1 à 6, **caractérisé en ce que** la zone en creux est réalisée dans un matériau différent de celui du reste du cadre et identifiable au toucher.

8. Interface de commande à écran tactile, comprenant un cadre (2) selon l'une quelconque des revendications 1 à 7.

9. Interface selon la revendication 8, **caractérisée en ce qu'**elle constitue une interface de commande d'équipement embarqué à bord d'un aéronef.

## Patentansprüche

1. Rahmen für eine berührungssensitive Steuerschnittstelle (3), umfassend einen Umfangsrand (5), der dazu bestimmt ist, die berührungssensitive Schnittstelle ganz oder teilweise zu umgeben, und einen offenen mittleren Bereich (4), über den die Schnittstelle durch Berührung aktivierbar ist, wobei dieser Rahmen mindestens einen vertieften Bereich (7) aufweist, der eine Fläche zur Aufnahme eines Fingers eines Benutzers begrenzt, die eine konkave Rinne darstellt, die sich entlang mindestens eines der Längsränder (5a, 5b) des Rahmens erstreckt, **dadurch gekennzeichnet, dass** die Rinne mit einer leuchtenden Umrandung versehen ist.

2. Rahmen nach Anspruch 1, **dadurch gekennzeichnet, dass** der vertiefte Bereich eine Rinne darstellt, die sich entlang mindestens eines der Seitenränder (5c, 5d) des Rahmens erstreckt.

3. Rahmen nach einem der Ansprüche 1 und 2, **dadurch gekennzeichnet, dass** die Rinne entlang der Ränder eine variable Form hat.

4. Rahmen nach Anspruch 3, **dadurch gekennzeichnet, dass** der Boden des vertieften Bereichs mit Reliefs zur Indexierung der Position des Fingers des Benutzers versehen ist.

5. Rahmen nach einem der Ansprüche 1 bis 4, **dadurch gekennzeichnet, dass** die Rinne einen Winkel von 45° bezüglich einer Ebene des Rahmens bildet.

6. Rahmen nach einem der Ansprüche 1 bis 5, **dadurch gekennzeichnet, dass** die Rinne an der Seite des offenen mittleren Bereichs (4) mit einem erhabenen Bereich (10) umrandet ist.

7. Rahmen nach einem der Ansprüche 1 bis 6, **dadurch gekennzeichnet, dass** der vertiefte Bereich aus einem anderen Material als der restliche Rahmen ausgeführt und durch Berührung identifizierbar ist.

8. Steuerschnittstelle mit berührungssensitivem Bildschirm, umfassend einen Rahmen (2) nach einem der Ansprüche 1 bis 7.

9. Schnittstelle nach Anspruch 8, **dadurch gekennzeichnet, dass** sie eine Steuerschnittstelle eines Ausrüstungsteils an Bord eines Luftfahrzeugs darstellt.

## Claims

1. Frame for a touch-sensitive control interface (3) comprising a peripheral border (5) designed to surround all or some of the touch-sensitive interface and an open central zone (4) by which the interface can be activated by touch, this frame comprising at least one hollow zone (7) delimiting a surface for receiving a finger of a user and constituting a concave gutter which extends along at least one of the longitudinal edges (5a, 5b) of the frame, and **characterized in that** the gutter is furnished with a luminous edging.

2. Frame according to Claim 1, **characterized in that** the hollow zone constitutes a gutter which extends along at least one of the lateral edges (5c, 5d) of the frame.

3. Frame according to one of Claims 1 and 2, **characterized in that** the gutter has a shape that varies along the said edges.

4. Frame according to Claim 3, **characterized in that** the bottom of the said hollow zone is furnished with reliefs for indexing the position of the finger of the user.

5. Frame according to any one of Claims 1 to 4, **characterized in that** the gutter forms an angle of 45° relative to a plane of the frame.

6. Frame according to any one of Claims 1 to 5, **characterized in that** the gutter is bordered, on the side of the open central zone (4), by a raised zone (10).

7. Frame according to any one of Claims 1 to 6, **characterized in that** the hollow zone is made of a material that differs from that of the rest of the frame and can be identified by touch.

8. Control interface with a touch-sensitive screen, comprising a frame (2) according to any one of Claims 1 to 7.

9. Interface according to Claim 8, **characterized in that** it constitutes a control interface of an item of control equipment on board an aircraft.
